# EUROPEAN PATENT SPECIFICATION

(11) **EP 2 809 860 B1**
(45) Date of publication and mention of the grant of the patent: **11.12.2019**
(21) Application number: 13743935.2
(22) Date of filing: 24.01.2013
(51) Int. Cl.: E05D 7/10, B60P 3/39

(54) **A METHOD AND A SYSTEM FOR ATTACHING A FOLDABLE BUNK TO A VERTICAL WALL IN A VEHICLE**
VERFAHREN UND SYSTEM ZUR BEFESTIGUNG EINER KLAPPBAREN SCHLAFLIEGE AN EINER SENKRECHTEN WAND IN EINEM FAHRZEUG
PROCÉDÉ ET SYSTÈME DE FIXATION D'UNE COUCHETTE PLIANTE À UNE PAROI VERTICALE D'UN VÉHICULE

(30) Priority: 02.02.2012 SE 1250077
(43) Date of publication of application: 10.12.2014
(73) Proprietor: Klippan Safety AB, 264 21 Klippan (SE)
(72) Inventor: YLIKANGAS, Roger, S-26354 Lerberget (SE); KARLSSON, Alexander, 254 50 Helsingborg (SE)
(74) Representative: Ström & Gulliksson AB
(86) International application number: PCT/SE2013/050052
(87) International publication number: WO 2013/115707

(56) References cited:
- EP-A1- 2 067 658
- DE-A1- 3 110 114
- DE-U1-202007 011 798
- FR-A1- 2 505 967
- GB-A- 824 985
- GB-A- 824 985
- US-A1- 2003 189 354
- US-A1- 2008 284 224
- US-A1- 2012 007 410

## Description

### Technical Field

The present invention relates to a method of mounting a foldable bunk to a substantially vertical wall in a vehicle, hinges being provided between the bunk and the wall for allowing a pivoting movement of the bunk between a first, substantially horizontal use position and a second position folded-up against the wall, each hinge comprising a wall member attached to the wall, a bunk member attached to the bunk, and a generally circular axle member for rotatably connecting the bunk member to the wall member, wherein the axle member has flat portions for enabling insertion of the axle member into circular holes through slots in the one of the wall member and the bunk member which is not provided with the axle member, the slots having a width corresponding to the smallest cross-section of the axle member created by the flat portions.

The invention also relates to a vehicle with a bunk system, comprising a foldable bunk attached to a substantially vertical wall in a vehicle by means of hinges of the type defined. A foldable bunk is disclosed in EP2067658 A1.

### Background of the Invention

Vehicles, typically but not exclusively trucks, may be provided with foldable bunks. A typical example is a truck cab, which is often provided with one or two bunks behind the driver's seat. An upper bunk is usually used as a secondary bed in the truck, and there is a demand for folding away such a bunk when not used. Such a bunk may also be used as a storage shelf with a safety system for holding loose objects in the bunk in a crash situation.

There are great demands on hinges for foldable vehicle bunks.

A basic requisite is that the hinges of the bunk must be very simple to assemble in the production line with few and simple steps. It is also a demand that the bunk can be easily disassembled by the customer or by service personnel. At the same time the safety is of major importance, so measures must be taken to ensure that the hinges do not accidentally fall apart.

Another basic requisite is that the design is as simple and cheap as possible.

Further, the hinges provide the connection between the bunk and the cab wall with its supports. In a crash situation the forces on the hinges will be extremely high, and large deformations on the hinges may occur. In many existing hinge solutions for a simple assembly the strength of the hinge proves to be reduced and inadequate.

The technique to enable a hinge to be easily assembled and disassembled by providing an axle with flat portions and the hinge with slots for inserting the axle into the hinge in a certain relative position of its members is known in different technical areas. A basic example is shown in US 4 223 421. There are also examples from the vehicle area, such as US 6 003 204, US 6 167 779, and US 2003/0116989.

### The Invention

An improved mounting method fulfilling demanding expectations is according to the invention characterized in that the mounting is accomplished with the bunk in a third position outside the pivot area between the first and second positions by the orientation of the flat portions in relation to the slots.

In a practical case the bunk is placed in a position slightly tilted-down from the first, use position with the axle member in contact with the slots, the flat portions being so oriented that the axle member will pass by gravity down into the circular holes.

The bunk may preferably be longitudinally guided at mounting by sloping wall portions of the hinge.

A vehicle with a bunk system according to the invention is characterized in that the slots and the flat portions are so oriented that the bunk with the bunk member can connect to the wall member by gravity in a certain position that it will not assume during use in the vehicle, whereas in all other positions the bunk member is locked to the wall member for relative rotative movements only.

The axle member is preferably attached to the bunk member.

In a first embodiment of a hinge according to the invention the circular holes are arranged in parallel portions of side-walls of the wall member and the slots in portions of the side-walls extending away from each other in a sloping or conical way.

### Brief Description of the Drawings

The invention will be described in further detail below under reference to the accompanying drawings, in which
Fig 1 is an isometric view of a foldable bunk in a vehicle in a mounting position, i. e. a position in which it can be attached to a vertical wall of the vehicle by means of a hinge according to the invention,
Fig 2 is an isometric view of the bunk in a horizontal use position,
Fig 3 is an isometric view of a first embodiment of a hinge according to the invention in an assembled condition,
Fig 4 is a side view of the two main members constituting the hinge according to the invention,
Figs 5 and 6 are side view illustrating two different positions of the two hinge members during mounting,
Figs 7 and 8 are side views illustrating two main positions of the assembled hinge members during use in the vehicle, and
Fig 9 is an isometric view of a second embodiment of a hinge according to the invention in a non-assembled condition.

### Detailed Description of Embodiments

A driver's cab of a vehicle, especially of a truck, may be provided with one or more bunks for personnel in the cab to rest or sleep on. Such bunks are normally mounted transversely with its long-sides attached to the back wall of the cab and behind the driver. At lest one such bunk, normally an upper bunk, may be folded away against the wall in order to provide more room if not used as a bed.

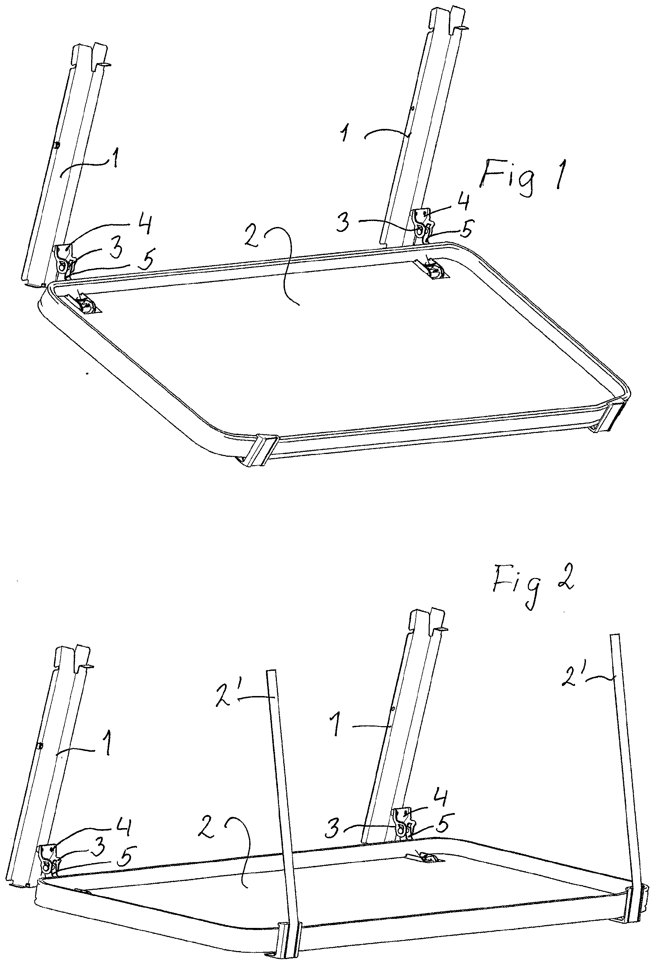

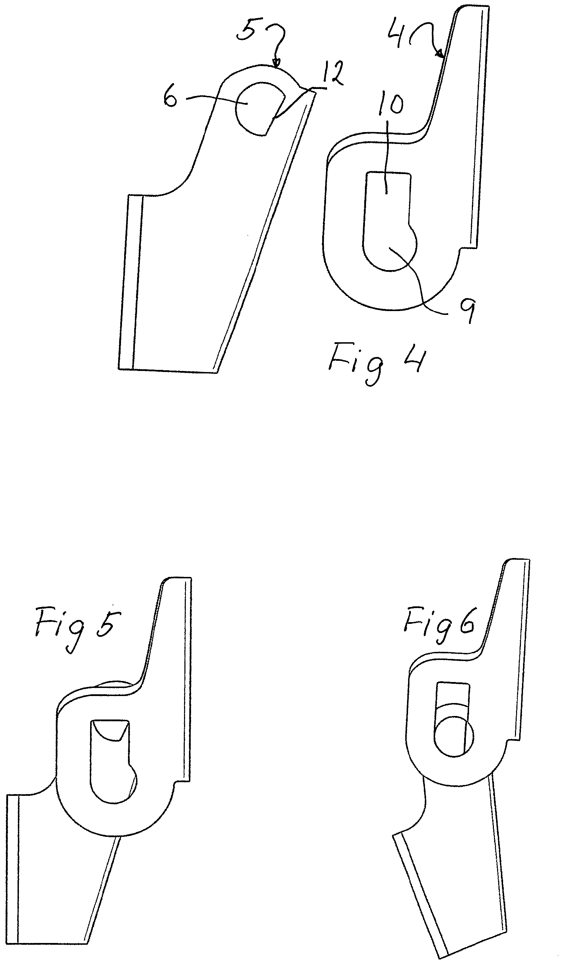

Figs 1 and 2 show two stanchions 1 of a substantially vertical back wall of a truck cab and a bunk 2 pivotally attached to the stanchions 1 (and thus the wall) by hinges 3, normally two hinges. Each hinge 3 is attached by a wall member 4 (Fig 4) to a stanchion 1 and by a bunk member 5 to a side-rim of the bunk 2.

Fig 1 illustrates the bunk 2 in a position where the bunk members 5 of the hinges 3 may be introduced into the wall members 4, as will appear more clearly below. This somewhat tilted-down position will otherwise not be assumed by the bunk 2 in use. Fig 2 illustrates the bunk 2 in a substantially horizontal position (held by belts 2' attached to the not shown ceiling of the cab). From this horizontal use position the bunk 2 may be folded up into a substantially vertical position against the wall for being out of the way in the cab.

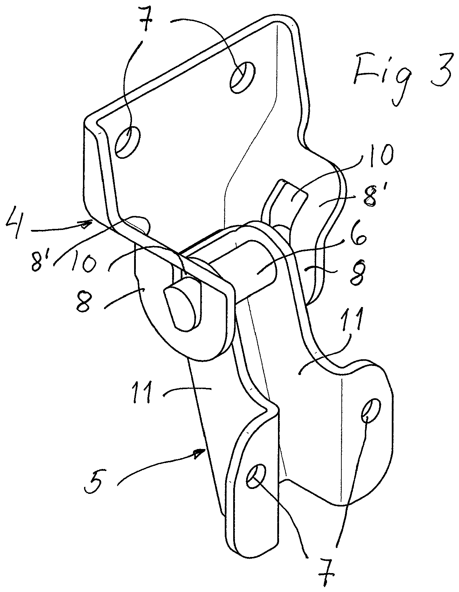

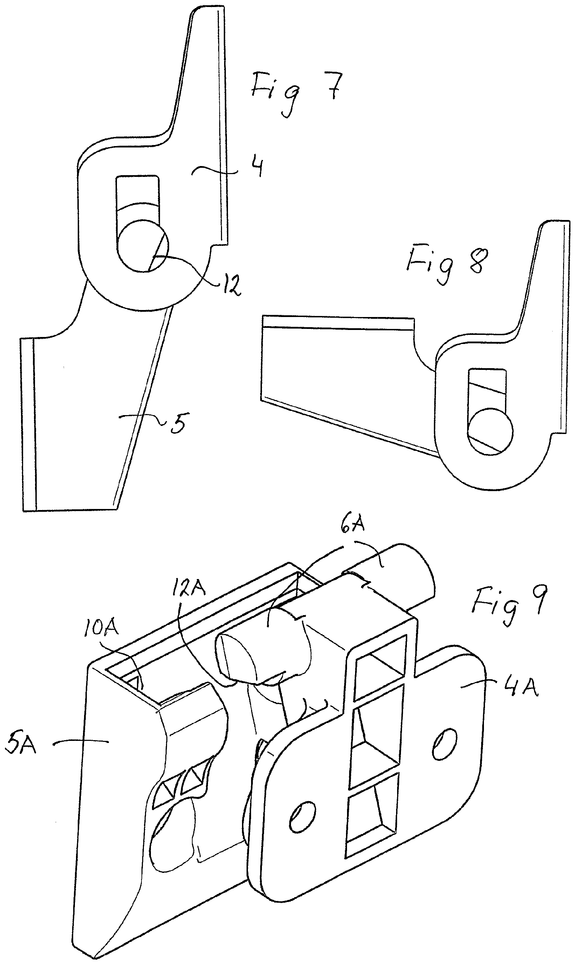

A first embodiment of a hinge according to the invention is illustrated in Figs 3-8, whereas a second embodiment is illustrated in Fig 9. The hinge of the first embodiment is generally built-up of pressed steel plate members, whereas the hinge of the second embodiment is generally built-up of injection molded members.

The hinge shown in Fig 3 consists of three basic members: a wall member 4, a bunk member 5, and an axle member 6 fixedly attached to the bunk member 5.

Both the wall member 4 and the bunk member 5 have holes 7 for screw attachment or the like to the stanchions 1 and a side-rim of the bunk 2, respectively.

The wall member 4 has two side-walls 8, which in lower parallel portions have generally circular holes 9 (Fig 4) for protruding ends of the axle member 6. Extending upwards from the holes 9 are slots 10 in portions 8' of the side-walls 8 diverging or extending away from each other in a sloping or conical way. The diameter of the holes 9 is larger than the width of the slots 10.

Also the bunk member 5 has two generally parallel side-walls 11, which are at a shorter distance from each other than the side-walls 8 of the wall member 4 and serve to non-rotatably mount the axle member 6. The axle member 6 is slightly longer than the distance between the parallel portions of the wall member side-walls 8. The axle member 6 has a generally circular cross-section but has a flat portion 12 (Fig 4) at least towards each end. As is most clearly visible in Fig 7, this flat portion 12 forms a certain angle with the vertical, when the two hinge member 4 and 5 are vertically in line with each other (i. e. the condition shown in Fig 2). The width of the slots 10 in the wall member side-walls 8 corresponds to the smallest cross-section of the axle member 6 created by its flat portion 12, so that the bunk member 5 of the hinge can only be joined to the wall member 4 thereof in a certain predetermined position. The overall diameter of the axle member 6 is slightly smaller than the diameter of the circular holes 9. When the axle member 6 has reached the circular holes 9, the bunk member 5 may be freely rotated in relation to the wall member 4.

Fig 4 shows the hinge members 4, 5 prior to assembly. The wall member 4 may be assumed to be mounted to a stanchion 1 or a back wall of the truck cab, whereas the bunk member 5 may be assumed to be mounted to a side-rim of the bunk 2. The bunk has been lifted horizontally into the cab, and Fig 4 illustrates the stage just prior to assembly.

The available space in a vehicle cab is very limited, and the bunk 2 is a large object. Thus, it is not an easy task to place the bunk 2 in correct position for assembly in relation to the hinge wall member 4. By providing the hinge wall member 4 with sloping wall portions 8', the task is greatly simplified. A longitudinal guiding of the bunk is accomplished.

In Fig 5 the bunk member 5 or rather its axle member 6 has been brought into contact with the wall member 4 and been guided as mentioned above. In this position possible lifting aids may be released from the bunk, but the hinge is not yet assembled. By releasing the lifting aids, the bunk will tilt downwards causing the bunk member 5 to rotate slightly counter-clockwise, so that the flat portion 12 of the axle member 6 will be guided down in the slots 10, reaching the position shown in Fig 6, where the hinge assembly is completed and the axle member 6 can perform its rotative action.

Fig 7 illustrates a position where the bunk connected to the bunk member 5 is held in a horizontal position (ready to use for rest or sleep) by supporting structures, not shown here but known to the person skilled in the art (and exemplified in Fig 2). The bunk member 5 and the axle member 6 associated therewith have been rotated slightly clockwise from the position shown in Fig 6, and a locking action in relation to the wall member 4 is established. It is not possible in this position to lift the axle member 6 upwards.

It can also be deduced from Fig 7 that the wall member 4 is a closed loop design, giving a very good crash strength. With special shapes to the axle member ends, this is a way of forming a closed strong connection between the bunk and the wall. It is possible to accomplish an advantageous safety solution in the truck by ensuring that a complete locking of the hinge will occur when deformed in a crash.

When using and folding the bunk, it can be freely rotated without loss of the locking function of the hinge. Fig 8 for example shows the relative positions of the hinge members 4, 5, when the bunk is folded up 90 degrees to a vertical position against the wall.

If it is desired to remove the bunk from the truck cab, the horizontal support structure for the bunk is removed, so that the bunk can tilt downwards into the position shown in Figs 1 and 6, ready to be lifted out.

A second embodiment of a hinge according to the invention is shown in Fig 9. This hinge may for example be injection molded in any suitable material.

Fig 9 only provides an overview of this hinge and does not show details of the design. However, the design and especially the function of the second embodiment of the hinge have great similarities with those of the first embodiment, and it is mostly the production method that differs.

The hinge shown in Fig 9 has a wall member 4A, a bunk member 5A, and an axle member 6A. There is a flat portion 12A at each protruding end of the axle member 6A. The bunk member 5A is provided with slots 10A (of which only one is shown) for the protruding ends of the axle member 6A to enter into with their flat portions 12A. The slots 10A lead into circular holes, as in the first embodiment, but that is not shown in Fig 9.

The function of this second embodiment of the hinge is the same as for the first embodiment when mounted to a wall of the vehicle cab and an end-rim of a bunk therein.

Modifications are possible within the scope of the claims.

## Claims

1. A method of mounting a foldable bunk (2) to a substantially vertical wall in a vehicle, hinges (3) being provided between the bunk (2) and the wall for allowing a pivoting movement of the bunk (2) between a first, substantially horizontal use position and a second position folded-up against the wall, each hinge (3) comprising a wall member (4; 4A) attached to the wall, a bunk member (5; 5A) attached to the bunk, and a generally circular axle member (6; 6A) for rotatably connecting the bunk member to the wall member, wherein the axle member (6; 6A) is fixedly attached to the bunk member (5; 5A) and wherein the axle member (6; 6A) has flat portions (12; 12A) for enabling insertion of the axle member into circular holes (9) through slots (10; 10A) in the wall member (4; 4A), the slots (10; 10A) having a width corresponding to the smallest cross-section of the axle member created by the flat portions (12; 12A), , wherein the circular holes (9) are arranged in parallel portions of side-walls (8) of the wall member (4) and the slots (10) in portions of the side-walls (8) extending away from each other in a conical way, wherein the mounting is accomplished with the bunk (2) in a third position outside the pivot area between the first and second positions by the orientation of the flat portions (12; 12A) in relation to the slots (10; 10A).

2. A method according to claim 1, wherein the bunk (2) is placed in a position slightly tilted-down from the first, use position with the axle member (6; 6A) in contact with the slots (10), the flat portions (12) being so oriented that the axle member (6; 6A) will pass by gravity down into the circular holes (9).

3. A method according to claim 2, wherein the bunk (2) is longitudinally guided at mounting by sloping wall portions (8') of the hinge (3).

4. A vehicle with a bunk system, comprising a foldable bunk (2) attached to a substantially vertical wall in a vehicle by means of hinges (3), each hinge (3) comprising a wall member (4; 4A) attached to the wall, a bunk member (5; 5A) attached to the bunk, and a generally circular axle member (6; 6A) for rotatably connecting the bunk member to the wall member, wherein the axle member (6; 6A) is fixedly attached to the bunk member (5; 5A) and wherein the axle member (6; 6A) has flat portions (12;12A) for enabling insertion of the axle member into circular holes (9) through slots (10; 10A) in the wall member (4; 4A), the slots (10; 10A) having a width corresponding to the smallest cross-section of the axle member created by the flat portions (12; 12A), wherein that the slots (10; 10A) and the flat portions (12; 12A) are so oriented that the bunk (2) with the bunk member (5; 5A) can connect to the wall member (4; 4A) by gravity in a certain position, a position outside the pivot area between a first, substantially horizontal use position and a second position folded-up against the wall, that it will not assume during use in the vehicle, whereas in all other positions the bunk member (5; 5A) is locked to the wall member (4; 4A) for relative rotative movements only, wherein the circular holes (9) are arranged in parallel portions of side-walls (8) of the wall member (4) and the slots (10) in portions of the side-walls (8) extending away from each other in a conical way.

5. A vehicle with a bunk system according to claim 4, wherein the slots (10) are parallel to the surface of the wall member (4) to be placed against the wall (1) of the vehicle.

## Patentansprüche

1. Verfahren zum Anbringen einer klappbaren Ablage bzw. Liege (2) an einer im Wesentlichen vertikalen Wand in einem Fahrzeug, wobei Scharniere (3) zwischen der Liege (2) und der Wand vorgesehen sind, um eine Schwenkbewegung der Liege (2) zwischen einer ersten, im Wesentlichen horizontalen Anwendungsposition und einer zweiten Position zu gestatten, in der sie gegen die Wand hochgeklappt ist, wobei jedes Scharnier (3) ein Wandglied (4; 4A) aufweist, welches an der Wand angebracht ist, weiter ein Liegenglied (5; 5A), welches an der Liege angebracht ist, und ein im Allgemeinen rundes Achsenglied (6; 6A) zur drehbaren Verbindung des Liegengliedes mit dem Wandglied, wobei das Achsenglied (6; 6A) fest an dem Liegenglied (5; 5A) angebracht ist, und wobei das Achsenglied (6; 6A) flache Bereiche (12; 12A) hat, um das Einführen des Achsengliedes in runde Löcher (9) durch Schlitze (10; 10A) in dem Wandglied (4; 4A) zu ermöglichen, wobei die Schlitze (10; 10A) eine Breite haben, welche dem kleinsten Querschnitt des Achsengliedes entspricht, der durch die flachen Bereiche (12; 12A) erzeugt wird, wobei die runden Löcher in parallelen Teilen der Seitenwände (8) des Wandgliedes (4) angeordnet sind, und die Schlitze (10) in Teilen der Seitenwände (8) sich in geneigter Weise weg voneinander erstrecken, wobei das Anbringen ausgeführt wird, wenn die Liege (2) in einer dritten Position außerhalb des Schwenkbereiches zwischen den ersten und zweiten Positionen durch Orientierung bzw. Ausrichtung der flachen Bereiche (12; 12A) bezüglich der Schlitze (10; 10A) ausgeführt wird.

2. Verfahren nach Anspruch 1, wobei die Ablage bzw. Liege (2) in einer Position angeordnet wird, die geringfügig gegenüber der ersten Anwendungsposition nach unten gekippt wird, wobei das Achsenglied (6; 6A) in Kontakt mit den Schlitzen (10) ist, wobei die flachen Bereiche (12) so orientiert bzw. ausgerichtet sind, dass das Achsenglied (6; 6A) durch die Schwerkraft herunter in die runden Löcher (9) laufen wird.

3. Verfahren nach Anspruch 2, wobei die Ablage bzw. Liege (2) beim Anbringen durch geneigte Wandteile (8') des Scharniers (3) in Längsrichtung geführt wird.

4. Fahrzeug mit einem Ablage- bzw. Liegensystem, welches eine klappbare Ablage bzw. Liege (2) aufweist, die an einer im Wesentlichen vertikalen Wand in einem Fahrzeug mittels Scharnieren (3) angebracht ist, wobei jedes Scharnier (3) ein Wandglied (4; 4A) aufweist, welches an der Wand angebracht ist, weiter ein Liegenglied (5; 5A), welches an der Liege angebracht ist, und ein im Allgemeinen rundes Achsengleid (6; 6A) zur drehbaren Verbindung des Liegengliedes mit dem Wandglied, wobei das Achsenglied (6; 6A) fest an dem Liegenglied (5; 5A) angebracht ist, und wobei das Achsenglied (6; 6A) flache Bereiche (12; 12A) hat, um das Einführen des Achsengliedes in runde Löcher (9) durch Schlitze (10; 10A) in dem Wandglied (4; 4A) zu ermöglichen, wobei die Schlitze eine Breite entsprechend dem kleinesten Querschnitt des Achsengliedes haben, der durch die flachen Bereiche (12; 12A) erzeugt wird, wobei die Schlitze (10; 10A) und die flachen Bereiche (12; 12A) so orientiert sind, dass die Liege (2) mit dem Liegenglied (5; 5A) mit dem Wandglied (4; 4A) in einer bestimmten Position durch Schwerkraft eine Verbindung herstellen kann, und zwar in einer Position außerhalb des Schwenkbereiches zwischen einer ersten, im Wesentlichen horizontalen Anwendungsposition und einer zweiten Position, die gegen die Wand hochgeklappt ist, welche sie während der Anwendung im Fahrzeug nicht einnehmen wird, wobei in allen anderen Positionen das Liegenglied (5; 5A) an dem Wandglied (4; 4A) nur für relative Drehbewegungen verriegelt ist, wobei die runden Löcher (9) in parallelen Bereiche der Seitenwände (8) des Wandgliedes (4) angeordnet sind, und die Schlitze (10) in Teilen der Seitenwände (8) sich in geneigter Weise weg voneinander erstrecken.

5. Fahrzeug mit einem Ablage- bzw. Liegensystem nach Anspruch 4, wobei die Schlitze (10) parallel zur Oberfläche des Wandgliedes (4) sind, um gegen die Wand (1) des Fahrzeuges angeordnet zu werden.

## Revendications

1. Procédé de montage d'une couchette escamotable (2) sur une paroi sensiblement verticale d'un véhicule, des charnières (3) étant disposées entre la couchette (2) et la paroi pour permettre un mouvement pivotant de la couchette (2) entre une première position d'utilisation sensiblement horizontale et une deuxième position escamotée contre la paroi, chaque charnière (3) comprenant un élément (4 ; 4A) de paroi fixé à la paroi, un élément (5 ; 5A) de couchette fixé à la couchette, et un élément d'axe globalement circulaire (6 ; 6A) permettant de relier mobile en rotation l'élément de couchette à l'élément de paroi, dans lequel l'élément d'axe (6 ; 6A) est fixé à demeure à l'élément (5 ; 5A) de couchette et dans lequel l'élément d'axe (6 ; 6A) comporte des parties plates (12 ; 12A) permettant une introduction de l'élément d'axe dans des trous circulaires (9) à travers des fentes (10 ; 10A) ménagées dans l'élément (4 ; 4A) de paroi, les fentes (10 ; 10A) ayant une largeur correspondant à la plus petite section transversale de l'élément d'axe créée par les parties plates (12 ; 12A), dans lequel les trous circulaires (9) sont ménagés dans des parties parallèles de parois latérales (8) de l'élément (4) de paroi et les fentes (10) ménagées dans des parties des parois latérales (8) s'étendant à l'opposé l'une de l'autre de façon conique, dans lequel le montage est obtenu lorsque la couchette (2) est dans une troisième position à l'extérieur de la zone de pivotement entre les première et deuxième positions par l'orientation des parties plates (12 ; 12A) par rapport aux fentes (10 ; 10A).

2. Procédé selon la revendication 1, dans lequel la couchette (2) est placée dans une position légèrement inclinée vers le bas de la première position d'utilisation, l'élément d'axe (6 ; 6A) étant en contact avec les fentes (10), les parties plates (12) étant orientées de façon telle que l'élément d'axe (6 ; 6A) descende par la gravité dans les trous circulaires (9).

3. Procédé selon la revendication 2, dans lequel la couchette (2) est guidée longitudinalement lors du montage par l'inclinaison de parties de parois (8') de la charnière (3).

4. Véhicule doté d'un système de couchette, comprenant une couchette escamotable (2) fixée à une paroi sensiblement verticale d'un véhicule au moyen de charnières (3), chaque charnière (3) comprenant un élément (4 ; 4A) de paroi fixé à la paroi, un élément (5 ; 5A) de couchette fixé à la couchette, et un élément d'axe globalement circulaire (6 ; 6A) permettant de relier mobile en rotation l'élément de couchette et l'élément de paroi, dans lequel l'élément d'axe (6 ; 6A) est fixé à demeure à l'élément (5 ; 5A) de couchette et dans lequel l'élément d'axe (6 ; 6A) comporte des parties plates (12 ; 12A) permettant une introduction de l'élément d'axe dans des trous circulaires (9) à travers des fentes (10 ; 10A) ménagées dans l'élément (4 ; 4A) de paroi, les fentes (10 ; 10A) ayant une largeur correspondant à la plus petite section transversale de l'élément d'axe créée par les parties plates (12 ; 12A), dans lequel les fentes (10 ; 10A) et les parties plates (12 ; 12A) sont orientées de façon telle que la couchette (2), avec l'élément (5 ; 5A) de couchette, puisse être reliée par la gravité à l'élément (4 ; 4A) de paroi dans une certaine position, une position à l'extérieur de la zone de pivotement entre une première position d'utilisation sensiblement horizontale et une deuxième position escamotée contre la paroi, qu'elle ne prendra pas en utilisation dans le véhicule, tandis que, dans toutes les autres positions, l'élément (5 ; 5A) de couchette n'est verrouillé à l'élément (4 ; 4A) de paroi que par rapport à des mouvements de rotation relatifs, dans lequel les trous circulaires (9) sont ménagés dans des parties parallèles de parois latérales (8) de l'élément (4) de paroi et les fentes (10) ménagées dans des parties des parois latérales (8) s'étendant à l'opposé l'une de l'autre de manière conique.

5. Véhicule doté d'un système de couchette selon la revendication 4, dans lequel les fentes (10) sont parallèles à la surface de l'élément (4) de paroi pour être placées contre la paroi (1) du véhicule.
